# EUROPEAN PATENT SPECIFICATION

(11) **EP 0 638 487 B1**
(45) Date of publication and mention of the grant of the patent: **07.01.1998**
(21) Application number: 94305783.6
(22) Date of filing: 04.08.1994
(51) Int. Cl.: B65D 81/34, B65D 65/40, B32B 27/20

(54) **Plastic multi-layer container having excellent flavor-retaining property and boiled rice-packaging material**
Mehrschichtiger Kunststoffbehälter für gekochten Reis mit ausgezeichneter den Geschmack behaltender Eigenschaft
Container à plusieurs couches en matière plastique pour riz cuit avec une propriété excellente pour garder le goût

(30) Priority: 06.08.1993 JP 196424/93
(43) Date of publication of application: 15.02.1995
(73) Proprietor: TOYO SEIKAN KAISHA LIMITED, Tokyo (JP)
(72) Inventor: Koyama, Yasumasa, Zushi-shi, Kanagawa-ken (JP); Goryoda, Toshio, Kanagawa-ku, Yokohama-shi, Kanagawa-ken (JP)
(74) Representative: BROOKES & MARTIN

(56) References cited:
- GB-A- 2 163 097
- GB-A- 2 207 439
- PATENT ABSTRACTS OF JAPAN, unexamined applications, M section, vol. 15, no. 443, November 12, 1991 THE PATENT OFFICE JAPANESE GOVERNMENT page 135 M 1178; & JP-A-03 189 140 (TOPPAN PRINTING)
- DERWENT ACCESSION no. 91-285 336, Questel Telesystems (WPIL) DERWENT PUBLICATIONS LTD., London; & JP-A-89 328 987 (TOPPAN PRINTING KK)
- DERWENT ACCESSION no. 90-326 069, Questel Telesystems (WPIL) DERWENT PUBLICATIONS LTD., London; & JP-A-89 058 411 (JUJO PAPER MFG KK)
- DERWENT ACCESSION no. 91-027 521, Questel Telesystems (WPIL) DERWENT PUBLICATIONS LTD., London; & JP-A-89 120 157 (KANEGAFUCHI CHEM KK)
- PATENT ABSTRACTS OF JAPAN, unexamined applications, M section, vol. 14, no. 552, December 07, 1990 THE PATENT OFFICE JAPANESE GOVERNMENT page 139 M 1056; & JP-A-02 235 740 (JUJO PAPER CO LTD)
- PATENT ABSTRACTS OF JAPAN, unexamined applications, C section, vol. 15, no. 76, February 21, 1991 THE PATENT OFFICE JAPANESE GOVERNMENT page 10 C 809; & JP-A-02 299 514 (KANEGAFUCHI CHEM)
- JAPANESE PATENTS REPORT, Ch section, vol. 87, no. 3, january 16-21, 1987 DERWENT PUBLICATIONS LTD., London; page J8-G; & JP-A-70 01 824 (NIPPON SYNTH CHEM IND)

## Description

### BACKGROUND OF THE INVENTION

### (Field of the Invention)

The present invention relates to a plastic multi-layer container having excellent property for retaining flavor of the content. More specifically, the invention relates to a plastic multi-layer container having excellent property for preventing foods from being oxidized and degraded as well as flavor-retaining property in combination, and to a boiled rice-packaging material using the same plastic multi-layer container.

### (Description of the Prior Art)

Metal cans, glass bottles and a variety of plastic containers have heretofore been used as packaging containers. Among them, the plastic containers have been used for a variety of applications since they are light in weight, have shock resistance and are cheaply produced.

However, though metal cans and glass bottles do not permit oxygen to pass through the walls, plastic containers permit oxygen to pass through the walls to a degree that cannot be neglected, imposing a problem from the standpoint of preserving the contents.

In order to prevent this problem, therefore, a multi-layer structure is employed for the walls of plastic containers, and a resin that does not permit oxygen to permeate through, such as an ethylene/vinyl alcohol copolymer or the like is used for at least one of the layers.

Resins having an oxygen barrier property such as ethylene/vinyl alcohol copolymer or the like is susceptible to the humidity and tends to permit oxygen to permeate through upon absorbing moisture. In order to prevent this problem, Japanese Laid-Open Patent Publication No. 170748/1982 discloses a multi-layer plastic container which is provided with a resin layer containing a moisture absorbent close to the ethylene/vinyl alcohol copolymer layer. Japanese Laid-Open Patent Publication No. 11339/1986 discloses

one having a thermoplastic resin medium in which are dispersed highly water-absorbing resin particles between a gas barrier resin layer and a moisture resistant resin layer.

According to the above prior art, permeation of oxygen through the container wall is suppressed, and the content is prevented from being oxidized or degraded, i.e., to enhance the preservability of the content. It was, however, found that the flavor retentivity of the content is often lost even in an environment where the content is prevented from being oxidized and degraded. This tendency becomes conspicuous particularly for the boiled rice and the like that have not been seasoned.

When the container containing the content is heated using a microwave oven or the like, offensive taste and offensive odor are produced leaving much of a problem.

### SUMMARY OF THE INVENTION

The present inventors have discovered the fact that the property for retaining the flavor of the content can be improved strikingly by providing a layer containing an adsorbent on the inside of the intermediate layer of a gas barrier resin of a plastic multi-layer container.

The object of the present invention is to provide a plastic multi-layer container having not only property for preserving the content but also excellent flavor-retaining property as well as to provide a boiled rice-packaging material using the same plastic multi-layer container.

Another object of the present invention is to provide a multi-layer plastic container and a packaging material which are capable of preserving the contents while excellently retaining their flavor, and can be put into a microwave oven for being cooked when it is desired to eat the contents without producing offensive taste or offensive odor but excellently retaining the flavor.

According to the prevent invention, there is provided a plastic multi-layer container having excellent flavor-retaining property comprising:
(A) an inner layer and an outer layer composed of a moisture resistant thermoplastic resin,
(B) an intermediate layer of a gas barrier resin sandwiched between said inner layer and said outer layer, and
(C) at least one layer on the inside of the intermediate layer of said gas barrier resin comprising a resin composition which contains an adsorbent having a specific surface area of not smaller than 1.0 m²/g as measured by a BET method in an amount of from 1 to 100 parts by weight per 100 parts by weight of the resin,
characterised in that said layer (C) comprises said resin composition which contains said adsorbent blended with an oxygen scavenger or
(D) a layer of a resin composition containing an oxygen scavenger is formed between said layer (C) containing the adsorbent and the intermediate layer (B) of the gas barrier resin.

The present invention further provides a boiled rice-packaging material wherein the above-mentioned plastic multi-layer container is charged with boiled rice or the like.

### BRIEF DESCRIPTION OF THE DRAWINGS

Fig. 1 is a sectional view illustrating an example of the multi-layer structure of the container of the present invention;
Fig. 2 is a sectional view illustrating another example of the multi-layer structure of the container of the present invention;
Fig. 3 is a sectional view illustrating an example in which the multi-layer structure shown in Fig. 1 is provided with a resin layer which is blended with a oxygen scavenger; and
Fig. 4 is a sectional view illustrating an example in which the multi-layer structure shown in Fig. 2 is provided with a resin layer which is blended with a oxygen scavenger.

### DETAILED DESCRIPTION OF THE INVENTION

The plastic multi-layer container of the present invention comprises an inner layer and an outer layer of a moisture resistant thermoplastic resin and an intermediate layer of a gas barrier resin, and has a distinguished feature in that a layer containing an adsorbent is provided on the inside of the intermediate layer of the gas barrier resin, making it possible to obtain an excellent flavor-retaining property while preventing the content such as boiled rice from developing offensive taste or offensive odor.

Contents such as boiled rice and the like develop offensive taste or offensive odor due to two causes: one is attributed to the container and another is attributed to degradation of the contents or foods. In the former case, a plastic emits its particular odor and, particularly, an olefin resin adsorbs various kinds of smell such as polyethylene odor specific to the plastic. In the latter case, odor emitted upon boiling may account for it. With a plastic multi-layer container, the intermediate layer of the gas barrier resin interrupts the permeation of such odors and the contents may adsorb the odor to a large degree.

With the plastic multi-layer container of the present invention, a layer of an adsorbent is provided on the inside of the intermediate layer of the gas barrier resin, and the inner layer of the moisture resistant thermoplastic resin permits the odor to permeate through. Therefore, odor due to the container and odor due to the content are effectively adsorbed by the adsorbent, preventing the content from developing offensive taste or offensive odor.

When adsorbent is used, it often happens that it adsorbs odor in advance and does not much contribute to adsorbing odor when it is in the form of a packaging material. In the container of the present invention, however, the adsorbent is contained in the resin and keeps its activity stably enabling the packaging material to stably sustain its deodorizing activity.

In forming an adsorbent-containing resin composition, furthermore, the resin is heated at a molding temperature giving an advantage in that the adsorbent is activated.

According to the present invention, the adsorbent has a BET specific surface area of not smaller than 1.0 m²/g. When the specific surface area is smaller than the above range, components producing offensive taste and offensive odor are not adsorbed to a sufficient degree, and satisfactory results are not obtained.

Furthermore, the amount of adsorbent with respect to the resin range from 1 to 100 parts by weight per 100 parts by weight of the resin. When the amount is smaller than the above range, the components producing offensive taste and offensive odor are not trapped to a sufficient degree. When the amount is larger than the above range, moldability and strength of the intermediate layer become unsatisfactory.

In the present invention, it is particularly desired to use a variety of activated carbons, a variety of aluminosilicate and diatomaceous earth as the adsorbent. Diatomaceous earth is a deposit of dead bodies of diatoms and chiefly comprises amorphous hydrate of silicon dioxide having numerous micropores, and is particularly effective for preventing the content such as boiled rice or the like from catching odor.

According to the present invention, furthermore, the layer containing the adsorbent is blended with a oxygen scavenger, or a layer of a resin composition blended with the oxygen scavenger is provided between a layer containing the adsorbent and an intermediate layer of a gas barrier resin, making it possible to maintain the content in a high degree of oxygen-free state yet preventing the loss of flavor retentivity caused by the presence of the oxygen scavenger, which is an unexpected advantage.

It has long been known to blend the oxygen scavenger in the wall of the container to remove oxygen from the container (e.g., see Japanese Patent Publication No. 1824/1987). The oxygen scavenger absorbs oxygen in the container and maintains the interior of the container in a high degree of state. Quite unexpectedly, however, the flavor of the content in the container is lost even when the content is maintained in a highly deoxygenated oxygen-free state. This tendency becomes conspicuous as the oxygen scavenger effectively works. For instance, when the multi-layer container containing the oxygen scavenger in the wall thereof is charged with a content and is hermetically sealed, and is then sterilized by heating such as by retort sterilization, or when the container containing the content is heated and cooked using a microwave oven, offensive taste and offensive odor migrate onto the content to spoil the flavor. The reason for this is presumably as described below. That is, removal of oxygen by the oxygen scavenger is an oxidation-reduction reaction, and the oxygen scavenger in many cases works as a catalyst for promoting degradation (e.g., oxidation) of a resin in which it is blended. These reactions form substances that impair the flavor. In a multi-layer structure having an intermediate layer of a gas barrier resin, the intermediate layer of the gas barrier resin on the outer side suppresses the components producing offensive taste and offensive odor from permeating toward the outer side. Accordingly, the components producing offensive taste and offensive odor migrate into the content.

According to the multi-layer plastic container of the present invention in which the layer containing the adsorbent is provided on the inside of the intermediate layer of the gas barrier resin, on the other hand, the oxygen scavenger is made present in the layer that contains the deodorant or is made present in another layer that is interposed between the layer containing the deodorant and the intermediate layer of the gas barrier resin, enabling the components producing offensive taste and offensive odor formed by the above reaction to be adsorbed without at all affecting absorption of oxygen by the oxygen scavenger, and thus effectively preventing the components producing offensive taste and offensive odor from migrating into the content.

In the multi-layer plastic container of the present invention, the adsorbent may be contained in a layer separate from the layer containing the disoxidation agent. Generally, however, it is desired to blend the adsorbent in the resin together the oxygen scavenger. This helps facilitate the blending operation or the molding operation. Moreover, excellent flavor-retaining property is obtained when the adsorbent and the oxygen scavenger are present together. This is presumably due to the fact that when the above two agents are present close to each other, the components producing offensive taste and offensive odor are adsorbed in a chemically active state by the adsorbent. It is therefore advantageous to intimately mix the oxygen scavenger and the adsorbent together, and blend this intimate mixture into the resin.

### (Multi-layer Structure of the Container)

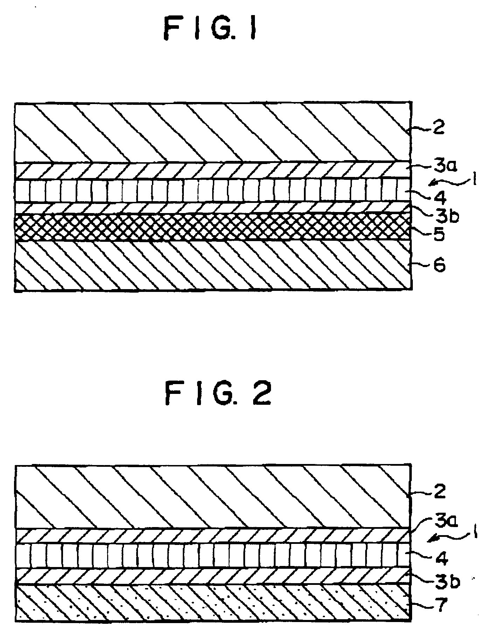

Referring to Fig. 1 illustrating an example of a multi-layer structure of the container of the present invention, a container wall 1 comprises an outer layer 2 of a moisture resistant thermoplastic resin, an adhesive resin layer 3a, a first intermediate layer 4 of a gas barrier resin, an adhesive resin layer 3b, a second intermediate layer 5 of a resin composition blended with an adsorbent, and an inner layer 6 of a moisture resistant thermoplastic resin. Attention should be given to the fact that the second intermediate layer 5 is blended with the adsorbent and is provided on the inside of the gas barrier resin layer 4.

Referring to Fig. 2 illustrating another example of a multi-layer structure of the container of the present invention, a container wall 1 comprises an outer layer 2 of a moisture resistant thermoplastic resin, an adhesive resin ayer 3a, an intermediate layer 4 of a gas barrier resin, an adhesive resin layer 3b, and an inner layer 7 of a moisture resistant thermoplastic resin blended with the adsorptive deodorant.

In the multi-layer structure shown in Figs. 1 and 2, the layer in which the adsorbent is blended (intermediate layer 5 in Fig. 1, inner layer 7 in Fig. 2) is blended with a oxygen scavenger as described above.

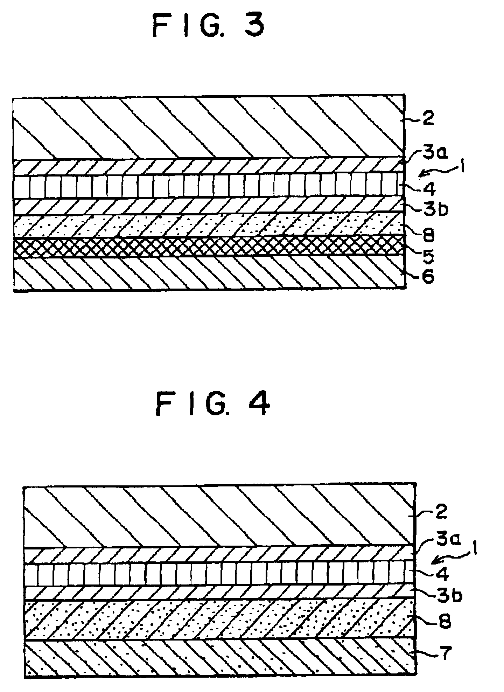

Figs. 3 and 4 illustrate examples in which a layer containing oxygen scavenger is provided as an independent layer. For instance, Fig. 3 illustrates an example in which in the multi-layer structure of Fig. 1, a layer 8 of a resin composition blended with the oxygen scavenger is provided on the outside of the intermediate layer 5 that contains the adsorbent, and Fig. 4 illustrates an example in which in the multi-layer structure of Fig. 2, a layer 8 of a resin composition blended with the oxygen scavenger is provided on the outside of the inner layer 7 that contains the adsorbent.

### [Adsorbent]

According to the present invention, a known adsorbent is used having a specific surface area of not smaller than 1.0 m²/g and, particularly, having a specific surface area of from 5.0 to 75 m²/g. Here, the adsorptive deodorant stands for the one of which the main deodorizing action is created by the adsorption by the surfaces of a solid matter. The adsorption may be based upon the chemical adsorption, as a matter of course.

As the adsorbent, there can be used a variety of activated carbons, diatomaceous earth, a variety of aluminosilicates and the like. As the activated carbon, there can be used the one obtained from coconut shell, timber or coal as a starting material. The activated carbon may be an ordinary one or to which acid or alkali may be added. The diatomaceous earth is a water-containing amorphous silicon dioxide, and is very porous, has macropores and excellently adsorbs the components that produce offensive taste and offensive odor.

As the aluminosilicate, there can be used a variety of tectosilicates such as natural and synthetic zeolites, as well as natural and synthetic phillosilicates. As the phillosilicate, there can be used magnesium phillosilicate, zinc phillosilicate, bentonite, active terra abla and acidic terra abla.

The adsorbent should usually have a grain size of not larger than 50 µm and, particularly, from 5 to 30 µm, from the standpoint of easy blending and dispersion in the resin.

### [Moisture Resistant Resin]

In the present invention, the moisture resistant resin (resin having small water absorption) to be provided on both sides of the container is a thermoplastic resin having a water absorption of not larger than 0.5% and, particularly, not larger than 0.1% as measured in compliance with ASTM D 570. Representative examples include low-, medium- or high-density polyethylene, isotactic polypropylene, ethylene-propylene copolymer, polybutene-1, ethylene-butene-1 copolymer, propylene-butene-1 copolymer, ethylene-propylene-butene-1 copolymer, ethylene-vinyl acetate copolymer, an olefin resin such as ionically crosslinked olefin copolymer (ionomer) or a blend thereof, a styrene resin such as polystyrene, styrene-butadiene copolymer, styrene-isoprene copolymer or ABS resin, a thermoplastic polyester such as polyethylene terephthalate or polytetramethylene terephthalate, and polycarbonate.

Among them, an olefin resin is preferred from the standpoint of sanitation and a propylene resin is suited from the standpoint of heat resistance.

### [Gas Barrier Resin]

As the gas barrier resin, there is used a thermoplastic resin which has a small oxygen permeability coefficient and can be heat-molded. The most suitable example of the gas barrier resin is an ethylene-vinyl alcohol copolymer. For instance, there is used a saponified product of a copolymer obtained by saponifying an ethylene-vinyl acetate copolymer having an ethylene content of from 20 to 60 mol% and, particularly, from 25 to 50 mol% up to a saponification degree of not smaller than 96 mol% and, particularly, not smaller than 99 mol%. The saponified product of ethylene-vinyl alcohol copolymer should have a molecular weight which is large enough for forming a film, and a viscosity of generally not smaller than 0.01 dl/g and, particularly, not smaller than 0.05 dl/g as measured in a mixture solvent of phenol:water of a weight ratio of 85:15 at a temperature of 30 °C.

As another example of the gas barrier resin having the above-mentioned properties, there can be used polyamides having amide groups in a number of from 5 to 50 and, particularly, from 6 to 20 per 100 carbon atoms, such as nylon 6, nylon 6,6, nylon 6/6,6 copolymer, metaxylene adipamide, nylon 6, 10, nylon 11, nylon 12 and nylon 13. These polyamides should have a molecular weight large enough for forming a film and should have a relative viscosity (η ᵣₑₗ) of not smaller than 1.1 and, particularly, not smaller than 1.5 as measured in the sulfuric acid of a concentration of 1.0 g/dl at a temperature of 30 °C .

### [Composition Containing Adsorbent]

As the thermoplastic resin to be blended with the adsorbent, any one of the above-mentioned moisture resistant resins and gas barrier resins can be used. There can be used a mixture of these resins or other resins, as a matter of course. From the standpoint of adhesiveness to the moisture resistant resin, it is desired to use a resin similar to the moisture resistant resin. From the standpoint of adhesiveness to the gas barrier resin, it is desired to use the gas barrier resin of the same kind.

The adsorbent is used at a concentration of from 1 to 100% by weight and, particularly, from 5 to 75% by weight with respect to the resin. When the content of the adsorbent is smaller than the above range, the flavor retentivity drops as compared with when its content is within the above-mentioned range. When the content of the adsorbent is larger than the above range, disadvantage results in regard to moldability and cost while no particular advantage is obtained in regard to flavor-retaining property.

### [Adhesive Resin]

Sufficient adhesiveness may not often be obtained during the lamination between the gas barrier resin such as the ethylene-vinyl alcohol copolymer and the moisture resistant thermoplastic resin. In this case, an adhesive resin layer is interposed between the two.

Examples of the adhesive resin include thermoplastic resins that contain carboxylic acid, carboxylic anhydride, carboxylate, carboxylic acid amide, or carbonyl group 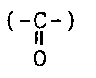 based upon carboxylic acid ester on the main chains or side chains at a concentration of from 1 to 700 milliequivalent (meq) per 100 g of the resin and, particularly, from 10 to 500 meq per 100 g of the resin. Suitable examples of the adhesive resin include ethylene-acrylic acid copolymer, ionically crosslinked olefin copolymer, maleic anhydride-grafted polyethylene, maleic anhydride-grafted polypropylene, acrylic acid-grafted polyolefin, ethylene-vinyl acetate copolymer, copolymerized polyester or copolymerized polyamide, which can be used in one kind or in a combination of two or more kinds. These resins are effective for being laminated by the simultaneous extrusion or by the sandwitch lamination. Furthermore, a thermosetting adhesive resin such as of an isocyanate or an epoxy can be used for adhering the preformed gas barrier resin film and the moisture resistant resin film.

### [Oxygen scavenger]

In the present invention, any oxygen scavenger can be used that has heretofore been used for the applications of this kind. In general, the oxygen scavenger should be reducing and is substantially insoluble in water. Suitable examples include a reducing metal powder such as reducing iron, reducing zinc, reducing tin powder; metal oxides of low degree such as ferrous oxide, tri-iron tetroxide, as well as reducing metal compound such as iron carbide, ferrosilicate, iron carbonyl or iron hydroxide, which can be used in one kind or in combination. As required, they can be used in combination with alkali metal, hydroxide of an alkaline earth metal, carbonate, sulfite, thiosulfate, tertiary phosphate, secondary phosphate, organic acid salt or halide.

There can be further exemplified a high molecular compound having a polyhydric phenol in the skelton such as a polyhydric phenol-containing phenolaldehyde and the like.

It is desired that the deoxidizing agent usually has an average grain size which is not larger than 100 µm and, particularly, not larger than 50 µm.

The deoxidizing agent can be used in combination with a water-absorbing agent. Examples of the water-absorbing agent include deliquescent inorganic salt, deliquescent organic compound and highly water-absorbing resin. Examples of the deliquescent material include sodium chloride, calcium chloride, zinc chloride, ammonium chloride, ammonium sulfate, sodium sulfate, magnesium sulfate, disodium hydrogenphosphate, sodium diphosphate, potassium carbonate and sodium nitrate, as well as organic compounds such as glucose, fruit sugar, sucrose, gelatin, modified casein, modified starch, tragacanth gum and polyvinyl alcohol. The highly water-absorbing resin can be defined as a resin which is essentially insoluble in water and is capable of absorbing water in an amount of several tens of times to several hundreds of times of its own weight. The highly water-absorbing resin usually has ionizing groups that contribute to absorbing water, and has mesh-like structure, crosslinked structure or gel-like structure to render the resin to be insoluble in water.

Known examples of the highly water-absorbing resin include grafted derivatives of starch or cellulose such as acrylic acid (salt)-grafted starch, acrylonitrile-grafted hydrolyzed product of starch or acrylic acid (salt)-grafted cellulose, polyfunctional monomer such as crosslinked polyacrylic acid (salt) and, particularly, acrylic acid (salt) and divinyl benzene, or copolymer of styrene and hydrophobic monomer such as acrylic esters; vinyl alcohol-acrylic acid (salt) block copolymer obtained by the saponification of a copolymer of vinyl acetate and acrylic acid ester; and modified polyvinyl alcohol obtained by reacting polyvinyl alcohol with acid anhydride such as maleic anhydride or phthalic anhydride to simultaneously introduce carboxyl group and crosslinked structure to the side chains. In these resins, the starch, cellulose or polyvinyl alcohol component works to insolubilize the polyacrylic acid component to maintain it in a gelled state. There has further been known a polyethylene oxide modified product having water-absorbing property which is based on a mechanism different from the above-mentioned water-absorbing resin. Though the above-mentioned highly water-absorbing resins can be all used, it is particularly preferred to use a crosslinked polyacrylic acid (salt) which has been placed in the market by Seitetsu Kagaku Co. in the trade names of Aquakeep 4S and Aquakeep 10SH. Other preferred examples include a vinyl alcohol-acrylic acid (salt) block copolymer and a modified product of polyethylene oxide which have been placed in the market by Sumitomo Kagaku Co. in the trade name of Sumikagels Type S and Type R.

### [Deoxidizing Agent-Containing Composition]

As the thermoplastic resin to be blended with the deoxidizing agent, there can be used either a moisture resistant resin or a gas barrier resin like the one blended with the adsorbent. It is of course allowable to use a mixture of these resins or other resins. From the standpoint of adhesiveness to the moisture resistant resin, it is desired to use a resin of the same kind as the moisture resistant resin. From the standpoint of adhesiveness to the gas barrier resin, it is desired to use a gas barrier resin of the same kind.

When the deoxidizing agent is to be contained in a layer that contains the adsorbent, the above-mentioned composition containing the adsorbent should be blended with the deoxidizing agent.

The deoxidizing agent should be used at a concentration of from 1 to 200% by weight and, particularly, from 10 to 100% by weight with respect to the resin. When the content of the deoxidizing agent is less than the above range, it becomes difficult to suppress the oxygen concentration in the container to be less than a concentration which is adapted to growing microorganisms. When the concentration is larger than the above range, there is obtained no distinguished effect with regard to decreasing the oxygen concentration but rather disadvantage results with regard to moldability and cost.

### [Laminated Layer Constitution]

It is desired that the resin layer blended with the adsorbent and the resin layer blended with the deoxidizing agent have thicknesses of generally from 10 to 200 µm and, particularly, from 20 to 100 µm though they may vary depending upon the odor permitted to exist in the container and the shape of the container.

The gas barrier resin layer should have a thickness of generally from 5 to 100 µm and, particularly, from 10 to 50 µm.

On the other hand, the moisture resistant resin layer should have a thickness of generally from 20 to 300 µm and, particularly, from 50 to 150 µm or a thickness which is from 0.1 to 30 times as large as, and, particularly, from 0.5 to 10 times as large as, the thickness of the intermediate layer. Moreover, the inner layer and the outer layer may have an equal thickness, or either the inner layer or the outer layer may be thicker than the other.

### [Process for Production]

The container of the present invention can be produced by a known process provided the aforementioned layer constitution is accomplished.

To simultaneously extrude many layers, the resins are melted, kneaded and are extruded by the extruders corresponding to the layers into a desired shape through a multi-layer multiple dies such as a T-die, a circular die or the like die. After melted and kneaded by injection machines corresponding to the resin layers, furthermore, the resins are coinjected or sequentially injected into an injection metal mold to obtain a multi-layer container or a preform for the container. There can be further employed a lamination system such as dry lamination, sandwich lamination or extrusion coating.

The molded article may assume the shape of a parison or a pipe for forming film, sheet, bottle or tube, or a preform for forming pipe, bottle or tube. By using a parison, pipe or preform, a bottle is easily formed by pinching off an extruded article using a pair of split molds and blowing a fluid thereinto. After the pipe or the preform is cooled, furthermore, the resins are heated at a drawing temperature, drawn in the axial direction, and are blow-drawn in the circumferential direction using the fluid pressure to obtain a bottle that is blow-drawn.

By subjecting the film or the sheet to vacuum molding, compressed-air molding, draw molding, or plug-assist molding, there can be obtained a packaging container in the form of a cup, a tray, etc.

In the case of the multi-layer film, the films are overlapped or folded like a bag, and the surrounding is heat-sealed to form a bag-like container.

### [Applications]

The plastic multi-layer container of the present invention is useful as a sealed packaging container for heating for sterilizing the content with hot water, for hot packaging or for retort sterilization, and particularly as a sealed packaging material for preserving boiled rice and the like at room temperature. The plastic multi-layer container is further useful as a packaging container for cooking the content with microwave heating in a microwave oven or a like oven after the package is opened.

Owing to the provision of the adsorbent-containing resin layer, offensive odor of the material constituting the container and offensive odor emitted from the content do not accumulate in the content but are trapped by the adsorbent, and excellent property is obtained for retaining the flavor of the content.

In an ordinary state, the gas barrier resin layer works to prevent the permeation of oxygen, i.e., works to shut off oxygen. Under the condition where the water and heat act simultaneously like in heat sterilization, however, the deoxidizing agent effectively works to shut off oxygen. That is, under the condition where the water and heat simultaneously act, the water permeates conspicuously through the moisture resistant resin layer and the gas barrier resin loses its own oxygen barrier property upon absorbing moisture or due to a rise in temperature. In an embodiment in which the layer on the inside of the gas barrier resin layer is blended with the deoxidizing agent of the present invention, the water that is adsorbed and the heat that is given activate the deoxidizing agent, whereby oxygen is effectively trapped by the deoxidizing agent and the permeation of oxygen is suppressed during the thermal sterilization. When the content needs not be subjected to the sterilization by hot water, hot packaging or retort sterilization and has a small amount of moisture, it is allowable to add trace amounts of water into the container before the packaging or to blow steam to the container, so that oxygen is trapped actively.

According to the present invention which is provided with a layer containing the adsorbent, furthermore, it is made possible owing to adsorption to effectively prevent offensive taste and offensive odor caused by the deoxidizing agent contained in the deoxidizing agent-containing layer from migrating to the content during the heat sterization or the cooking by heating. Therefore, even when oxygen remaining in the container is absorbed to maintain the interior of the container in a high degree of oxygen-free state, flavor of the content is effectively prevented from being lost.

### EXAMPLES

The present invention will now be described by way of Examples.

### (Example 1)

By using a batchwise high-speed stirrer vane-type mixer, polypropylene resin (MI, 0.5 g/10 min, 230°C) was mixed with an iron-type oxygen absorbing agent having an average grain size of 30 µm and diatomaceous earth having an average grain size of 30 µm as an adsorptive substance in amounts of 20% by weight and 10% be weight, respectively. The mixture was then pelletized by using a pelletizer constituted by a extruder, a strand die, a blower cooling machine and a cutter, and having a screw of a diameter of 50 mm. A sheet consisting of six layers of four lands was prepared by using a mixture (POA) of the above pelletized polypropylene having a melt index at 230°C of 0.5g/10min, oxygen-absorbing agent and adsorptive substance as a second intermediate layer, an ethylene-vinyl alcohol copolymer (EVOH, ethylene content of 32 mol%, saponification degree of 99.6 mol%) as a first intermediate layer, polypropylene (PP) having a melt index of 0.5 g/10 min (230°C) as inner and outer layers, and PP (ADH) modified with maleic anhydride having an MI of 1.0 g/10 min as adhesive layers (a total thickness of 0.5 mm, thickness ratios of PP/POA/ADH/EVOH/ADH/PP = 5:10:1:2:1:30). The sheet was heated at about 190°C and, then, by using a vacuum molding machine, an oval container was formed having a depth of 35 mm, a long axis of 135 mm and a short axis of 105 mm, the POA layer being on the inside of the EVOH layer.

The container was charged with 1 ml of H₂O and glass beads in an atmosphere of an oxygen concentration of 1% so that space in the container was 40 ml, and was heat-sealed with a gas-impermeable closure member laminated with aluminum. While preserved at 22 °C , the oxygen concentration in the container was measured at time intervals The results were as shown in Table 1. For comparison, a container was prepared having a polypropylene layer instead of the second intermediate layer (comparative container 1). There were further prepared containers having the second intermediate layer blended with the oxygen-absorbing agent and diatomaceous earth only (comparative containers 2 and 3). These containers were similarly hermetically sealed, and the oxygen concentrations in the containers were measured after every predetermined period of time. After one week has passed, the closures were removed from the containers which were then heated in a microwave oven (ER 240 produced by Toshiba Co.) for 5 minutes to evaluate the odor of the containers. The results of evaluation were as shown in Table 1 from which it will be obvious that the container of the present invention does not lose oxygen-absorbing ability and flavor even after heated in the microwave oven as compared with the comparative containers.

### (Example 2)

A container similar to that of Example 1 was prepared but using resin components of polypropylene:polyvinyl alcohol = 95:5 as the second intermediate layer and carbon black (3% by weight) as adsorptive component, and the properties were evaluated in the same manner as in Example 1. For comparison, the same container was prepared but without containing carbon black. The results were as shown in Table 1.

The comparative container possessed oxygen-absorbing ability but lost flavor upon the heating in the microwave oven.

### (Example 3).

The test was carried out in the same manner as in Example 1 by using the container of the invention of Example 1 and a closure member of a laminate of polyethylene terephthalate/adhesive agent/ethylene-vinyl alcohol copolymer/adhesive agent/polypropylene. For comparison, a container similar to that of the present invention was prepared but having, as the second intermediate layer, a polypropylene layer containing neither oxygen-absorbing agent nor adsorptive substance. The results were as shown in Table 2. In the case of the comparative container, the oxygen concentration in the container gradually increased beyond the initial value of 1.0% due to oxygen that infiltrated into the container from the external side permeating through the closure member. The container of the present invention, on the other hand, not only absorbed oxygen that had permeated through but also absorbed oxygen remaining in the container. Accordingly, the oxygen concentration in the container gradually decreased down to 0%. After preserved for one month, the container closure was opened, and the container was heated in the microwave oven to examine the odor emitted by the container upon heating. There was, however, no problem.

### (Example 4)

A multi-layer plastic container (of the present invention) having a second intermediate layer which contains the oxygen-absorbing agent and adsorptive substance and a container having a second intermediate layer of polypropylene only without containing additives (comparative container) were each charged with 200 g of boiled rice in the same manner as in Example 1, and were hermetically sealed by heating using the laminated material of Example 3 as a closure member while being substituted with nitrogen. The oxygen concentration in the containers was 1%. After presevation at room temperature for one month, the functions were checked based on a two-item-taste testing method. The results were as shown in Table 3, and there existed a significant difference of 5% in terms of danger factor.

**Table 1**

| Example 1 | Change in oxygen concentration in the container (%) | | | | | | | Heating in a microwave oven |
|---|---|---|---|---|---|---|---|---|
| | Immediately after sealed | 1 day | 2 days | 3 days | 4 days | 5 days | 6 days | |
| Container of the invention | 1.0 | 0.5 | 0.1 | 0 | 0 | 0 | 0 | ○ |
| Comparative container 1 | 1.0 | 1.0 | 1.0 | 1.0 | 1.0 | 1.0 | 1.0 | ○ |
| Comparative container 2 | 1.0 | 0.5 | 0.1 | 0 | 0 | 0 | 0 | X |
| Comparative container 3 | 1.0 | 1.0 | 1.0 | 1.0 | 1.0 | 1.0 | 1.0 | ○ |

| Example 2 | | | | | | | | |
|---|---|---|---|---|---|---|---|---|
| Container of the invention | 1.0 | 0.3 | 0 | 0 | 0 | 0 | 0 | ○ |
| Comparative container | 1.0 | 0.3 | 0 | 0 | 0 | 0 | 0 | X |
| Heating in a microwave oven ○: well heated X: poorly heated | | | | | | | | |

**Table 2**

| Example 3 | Change in oxygen concentration in the container (%) | | | | | Heating in a microwave oven |
|---|---|---|---|---|---|---|
| | Immediately after sealed | 0.5 months | 1 month | 2 months | 3 months | |
| Container of the invention | 1.0 | 0.6 | 0.5 | 0.2 | 0 | ○ |
| Comparative container | 1.0 | 1.2 | 1.3 | 1.6 | 1.9 | ○ |

**Table 3**

| Items judged | Degree of taste | |
|---|---|---|
| | Container of the invention | Comparative container |
| Taste | 15 | 5 |

### (Example 5)

A sheet was prepared by using a polypropylene resin (MI, 0.5 g/10 min, 230 °C , PP) as inner layer and outer layers, using an ethylene-vinyl alcohol copolymer (ethylene content of 32 mol%, saponification degree of 99.6 mol%, EVOH) as a first intermediate layer located on the side of the outer layer, using a polypropylene resin (PO) containing an iron-type oxygen-absorbing agent in an amount of 30% by weight and having a melt index of 0.5 g/10 min (230 °C ) as a second intermediate layer on the side of the inner layer, and using a polypropylene resin (PA) containing 20% by weight of diatomaceous earth having an average grain size of 30 µ m and having a melt index of 0.5 g/min (230 °C ) as a layer on the inside of the above second intermediate layer. A polypropylene resin PP(ADH) modified with maleic anhydride having a melt index of 1.0 g/10 min (230 °C ) was used as an adhesive on both sides of the first intermediate layer. The sheet possessed a total thickness of 0.5 mm and thickness ratios of PP/ADH/EVOH/ADH/PO/PA/PP = 30/1/2/1/5/5/5. A container was prepared in the same manner as in Example 5 to evaluate the properties.

The oxygen concentration in the container gradually decreased to become smaller than the initial value of 1.0%, and became smaller than 0.1% after three days have passed. No offensive odor was recognized even after heating using the microwave oven.

## Claims

1. A plastic multi-layer container having excellent flavor-retaining property comprising:
(A) an inner layer and an outer layer composed of a moisture resistant thermoplastic resin,
(B) an intermediate layer of a gas barrier resin sandwiched between said inner layer and said outer layer, and
(C) at least one layer on the inside of the intermediate layer of said gas barrier resin comprising a resin composition which contains an adsorbent having a specific surface area of not smaller than 1.0 m²/g as measured by a BET method in an amount of from 1 to 100 parts by weight per 100 parts by weight of the resin,
characterised in that said layer (C) comprises said resin composition which contains said adsorbent blended with an oxygen scavenger or
(D) a layer of a resin composition containing an oxygen scavenger is formed between said layer (C) containing the adsorbent and the intermediate layer (B) of the gas barrier resin.

2. A plastic multi-layer container according to claim 1, wherein said adsorbent comprises fine grains of diatomaceous earth or activated carbon.

3. A plastic multi-layer container according to claim 1, wherein the layer containing said adsorbent is formed between the inner layer and the intermediate layer of the gas barrier resin.

4. A plastic multi-layer container according to any one of claims 1 to 3, wherein said oxygen scavenger is blended in a amount of from 1 to 200 parts by weight per 100 parts by weight of the resin consituting the layer.

5. A container as claimed in any one of the preceding claims containing boiled rice.

6. The use of a container as claimed in any one of claims 1 to 4 in retaining the flavor of boiled rice or the like stored therein.

## Patentansprüche

1. Mehrschichtiger Kunststoffbehälter mit ausgezeichneten den Geschmack bewahrenden Eigenschaften, welcher umfaßt:
(A) eine innere Schicht und eine äußere Schicht, die aus einem feuchtigkeitsbeständigen thermoplastischen Harz aufgebaut sind,
(B) eine Zwischenschicht aus einem Gasbarriereharz, welche zwischen der inneren und der äußeren Schicht angeordnet ist, und
(C) wenigstens eine auf der Innenseite der Zwischenschicht aus dem Gasbarriereharz angeordnete Schicht, die eine Harzzusammensetzung aufweist, welche ein Adsorbens mit einer spezifischen Oberfläche von nicht weniger als 1,0 m²/g, gemessen mit einem BET-Verfahren, in einer Menge von 1 bis 100 Gewichtsteilen pro 100 Gewichtsteilen des Harzes enthält,
dadurch gekennzeichnet, daß die Schicht (C) die Harzzusammensetzung, welche das Adsorbens vermischt mit einem Sauerstoffaufnehmer aufweist, enthält oder
(D) eine Schicht aus einer Harzzusammensetzung, welche einen Sauerstoffaufnehmer enthält, zwischen der das Adsorbens enthaltenden Schicht (C) und der Zwischenschicht (B) aus dem Gasbarriereharz angeordnet ist.

2. Mehrschichtiger Kunststoffbehälter gemäß Anspruch 1, bei dem das Adsorbens feine Körner aus Diatomeenerde oder Aktivkohle aufweist.

3. Mehrschichtiger Kunststoffbehälter gemäß Anspruch 1, bei dem die das Adsorbens enthaltende Schicht zwischen der inneren Schicht und der Zwischenschicht aus Gasbarriereharz angeordnet ist.

4. Mehrschichtiger Kunststoffbehälter gemäß einem der Ansprüche 1 bis 3, bei dem der Sauerstoffaufnehmer vermischt ist in einer Menge von 1 bis 200 Gewichtsteilen pro 100 Gewichtsteilen des die Schicht aufbauenden Harzes.

5. Behälter gemäß einem der vorhergehenden Ansprüche, der gekochten Reis enthält.

6. Verwendung eines Behälters gemäß einem der Ansprüche 1 bis 4 zur Bewahrung des Geschmacks von in dem Behälter aufbewahrtem gekochtem Reis oder ähnlichem.

## Revendications

1. Récipient en matière plastique multicouche ayant une excellente propriété de conservation de la flaveur, comprenant:
(A) une couche interne et une couche externe composées d'une résine thermoplastique résistant à l'humidité,
(B) une couche intermédiaire en une résine de barrière aux gaz, en sandwich entre ladite couche interne et ladite couche externe, et
(C) au moins une couche sur la face interne de la couche intermédiaire de ladite résine de barrière aux gaz, comprenant une composition de résines qui contient un adsorbant ayant une aire de surface spécifique d'au moins 1,0 m²/g telle que mesurée par la méthode BET en une quantité de 1 à 100 parties en poids pour 100 parties en poids de la résine,
caractérisé par le fait que ladite couche (C) comprend ladite composition de résine qui contient ledit adsorbant en mélange avec un absorbeur d'oxygène ou
(D) une couche d'une composition de résine contenant un piège à oxygène est formée entre ladite couche (C) contenant l'adsorbant et la couche intermédiaire (B) de la résine de barrière aux gaz.

2. Récipient en matière plastique multicouche selon la revendication 1, dans lequel ledit adsorbant comprend des grains fins de terre à diatomées ou de charbon actif.

3. Récipient en matière plastique multicouche selon la revendication 1, dans lequel la couche contenant ledit adsorbant est formée entre la couche interne et la couche intermédiaire de la résine de barrière aux gaz.

4. Récipient en matière plastique multicouche selon l'une quelconque des revendications 1 à 3, dans lequel ledit absorbeur d'oxygène est mélangé en une quantité de 1 à 200 parties en poids pour 100 parties en poids de la résine constituant la couche.

5. Récipient selon l'une quelconque des revendications précédentes, contenant du riz cuit.

6. Utilisation d'un récipient tel que revendiqué dans l'une quelonque des revendications 1 à 4 pour la conservation de la flaveur du riz cuit ou analogue qui y est conserve.
